# EUROPEAN PATENT SPECIFICATION

(11) **EP 2 093 135 B1**
(45) Date of publication and mention of the grant of the patent: **15.06.2011**
(21) Application number: 08021099.0
(22) Date of filing: 04.12.2008
(51) Int. Cl.: B62J 27/00, B62K 11/04

(54) **Motorcycle**
Motorrad
Motocyclette

(30) Priority: 19.02.2008 JP 2008037618
(43) Date of publication of application: 26.08.2009
(73) Proprietor: Honda Motor Co., Ltd., Minato-ku Tokyo 107-8556 (JP)
(72) Inventor: Misaki, Kenichi, Wako-shi Saitama 351-0193 (JP); Kuroki, Kazuyoshi, Wako-shi Saitama 351-0193 (JP); Kuroe, Takeshi, Wako-shi Saitama 351-0193 (JP); Kawamura, Ippei, Wako-shi Saitama 351-0193 (JP)
(74) Representative: Liska, Horst

(56) References cited:
- JP-A- 6 199 261
- JP-A- 58 209 671
- JP-A- 2007 083 882
- JP-A- 2007 269 271
- US-A1- 2002 125 710

## Description

### Technical Field

The present invention relates to a motorcycle having a cowl stay for supporting a cowling which covers a front part of the vehicle.

### Background Art

A motorcycle having a cowl stay which extends toward the front side of a head pipe and which supports a cowling covering a front part of the vehicle has been known (refer to, for example, Patent Document No. JP 3503889).

In FIG. 1 of Patent Document No. JP 3503889, a cowl stay 9 (the same reference symbols as used in the patent document are used here and hereinbelow) is a member for fixing a cowling 1 to the body frame side, a rear end part of a center bracket 21 provided as a component of the cowl stay 9 is fixed to a head pipe 3, and a pair of mounting pieces 27, 27 constituting the cowl stay 9 are fixed to a down tube 6 constituting the main frame.

Meanwhile, in the technology of Patent Document No. JP 3503889, a front end part of the cowl stay 9 is disposed on the rear side relative to a front end part of a head lamp unit 11. Therefore, for example when an impact force inclusive of an excessively strong shock or the like is inputted from the front side, the impact force is received by the front wheel, and is not absorbed by the cowl stay 9. In order to absorb the impact force by the cowl stay 9 effectively, the attitude of the vehicle has to be changed largely. In other words, in Patent Document No. JP 3503889, the cowl stay 9 is not accompanied by the thought of absorption of impact.

Besides, in recent years, a motorcycle provided with an air bag module 20 (the reference symbol used in the relevant document is used here and hereinafter) on the front side of a rider seat on which to seat a rider or riders has been known (refer to, for example, Patent Document No. JP-A-2007-69793).

In FIG. 7 of Patent Document No. JP-A-2007-69793, the motorcycle is provided with the air bag module 20 (the reference symbol used in the relevant document is used here and hereinafter) which incorporates an air bag for effectively protect the rider(s) when an impact force inclusive of an excessively strong shock or the like is exerted from the front side of the vehicle.

It is to be noted, however, that Patent Document No. JP-A-2007-69793 includes the thought of protecting the rider(s) with the air bag, but a vehicle-body configuration for making the air bag function more effectively is not taken into consideration in the document.

JP 2007 083882 A discloses a motorcycle in accordance with the preamble of claim 1.

### Problems to be Solved by the Invention

It is an object of the present invention to provide a motorcycle the attitude of which can be sustained appropriately when an excessively strong impact force is exerted on the motorcycle from the front side of it, while the cowl stay can be made lighter in weight.

### Means for Solving the Problems

The invention according to claim 1 resides in a motorcycle including a head pipe, main frames extending toward rear left and right sides from the head pipe, and a cowl stay extending toward a front side of the left and right main frames and supporting a cowling covering the vehicle. The cowl stay is so disposed that, in a side view of the vehicle, a front end part thereof is located on a rear side relative to a front end part of a front wheel and on a front side relative to a tip part of a head light provided on a front side of the head pipe so as to illuminate a front side of the vehicle.

The cowl stay includes left and right main stay parts extending forwards from the main frames, a cross part connecting front ends of the main stay parts to each other, and left and right slant members connecting the main stay parts and the main frames to each other.

The cowl stay has a center arm extending forwards from the head pipe, and arm parts connecting the center arm to the main stay parts.

In the invention according to claim 2, characteristically, the cowl stay is disposed above a center-of-gravity position of the vehicle.

In the invention according to claim 3, characteristically, the cowl stay is mounted to the main frames.

In the invention according to claim 4, characteristically, points at which the main stay parts are mounted to the main frames and points at which the slant members are mounted to the main frame are different.

In the invention according to claim 5, characteristically, the slant members are formed in a roughly inverted V shape pointing up, in the side view of the vehicle.

In the invention according to claim 6, characteristically, a rider seat for a rider or riders is provided on a rear side of the main frames, and an air bag module is provided on a front side of the rider seat.

### Effects of the Invention

In the invention according to claim 1, the cowl stay is so disposed that, in side view of the vehicle, a front end part thereof is located on the rear side relative to a front end part of a front wheel and on the front side relative to a front end part of a head light provided on the front side of the head pipe so as to illuminate the front side of the vehicle.

When the motorcycle receives an excessive shock from the front side, first, the front wheel collides against the object, and then a front fork contracts so as to absorb the shock and the vehicle body inclusive of the main frames falls along the front fork. In this instance, since the front fork is disposed with its upper end part inclined to the rear side, the vehicle body falls and, simultaneously, moves to the front side relative to the position of the front wheel, and a front end part of the cowl stay comes into contact with the object. Then, the shock is received by the front wheel and the cowl stay.

Since the shock is received at two points by the front wheel and the cowl stay, the change in attitude of the motorcycle can be suppressed, as compared with the case where the shock is received by only the front wheel.

In this case, when the spacing between the front wheel and the cowl stay in the vertical height direction is secured in a predetermined amount, the change in the attitude of the motorcycle can be suppressed more suitably.

The cowl stay includes a cross part connecting the front ends of the main stay parts to each other and left and right slant members connecting the main stay parts and the main frames to each other. Therefore, the strength of the cowl stay can be enhanced, as compared to the case where the cowl stay includes only the main stays.

In addition, by utilizing the main stays and the slant members, it is possible, for example, to mount a regulator, a battery and a control unit to the slant members or the like. Since various component parts can thus be mounted, the degree of freedom in layout of the component parts in a front part of the vehicle can be enhanced largely.

In the invention according to claim 1, the cowl stay includes a center arm and arm parts connecting the center arm to the main stay parts, so that the rigidity of the cowl stay can be more enhanced. Since the main stay parts provided in the cowl stay are each supported by the center arm and the arm part in addition to the slant member; the possibility of concentration of a load on the slant member can be lowered, as compared with the case where only the slant members are provided as reinforcing members. With the possibility of concentration of a load on the slant member lowered, the slant member can be made lighter in weight, and the cowl stay as a whole can be made lighter in weight.

In the invention according to claim 2, the cowl stay is disposed above the center-of-gravity position of the vehicle. Therefore, when the motorcycle receives an excessively strong impact force from the front side, a holding force from above the center-of-gravity position of the vehicle is exerted, whereby the change in the attitude of the motorcycle can be suppressed more, as compared with the case where the cowl stay is disposed below or at the same level as the center-of-gravity position of the vehicle.

In the invention according to claim 3, the cowl stay is mounted to the main frames. Therefore, the mounting strength of the cowl stay can be enhanced largely, as compared with the case where the cowl stay is mounted only to the head pipe.

In the invention according to claim 4, the main stay part and the slant member are mounted to the main frame at different points, respectively. Therefore, when a shock is inputted to the main stay part from the front side, the slant member supports the main stay part so as to suppress bending of the main stay part. Since an input exerted from the front side is received at a plurality of different points, the rigidity of the cowl stay can be enhanced. With the rigidity of the cowl stay enhanced, the change in the attitude of the vehicle can be more suppressed.

In the invention according to claim 5, the slant members are each formed in a roughly inverted V shape. Therefore, when a strong shock is inputted from the front side, the main stay parts are bent, and, since the slant members are each formed in a roughly inverted V shape, the slant members are liable to be bent into an upwardly projected shape at the vertex part of the roughly inverted V shape. In this case, since the spacing between the main stay part and the slant member is enlarged, the possibility of a change in the attitude of the vehicle can be lowered.

In the invention according to claim 6, a rider seat for a rider or riders is provided on the rear side of the main frames, and an air bag module is provided on the front side of the rider seat.

When an input such as an excessively strong shock is exerted on the cowl stay, the change in the attitude of the motorcycle can be suppressed by the cowl stay, so that the rider(s) can be protected suitably when the air bag is inflated.

### Industrial Applicability

The present invention is applicable to a motorcycle provided with a cowl stay.

### Brief Description of the Drawings

FIG. 1 is a left side view of a motorcycle according to the present invention.
FIG. 2 is a perspective view of a cowl stay provided in the motorcycle according to the present invention.
FIG. 3 is a side view of a right front part of the motorcycle according to the present invention.
FIG. 4 is a side view of an air bag module disposed on the upper side of a rear part of a fuel tank and the surroundings of the same.
FIG. 5 is a perspective view of the air bag module disposed on the upper side of the rear part of the fuel tank and the surroundings of the same.
   (a) and (b) of FIG. 6 illustrate the operation of the cowl stay provided in the motorcycle according to the present invention.
   (a), (b) and (c) of FIG. 7 illustrate the operation of the air bag module.
   (a) and (b) of FIG. 8 are respectively an illustration of the operation of the air bag module mounted to the motorcycle according to the present invention and an illustration of a comparative example.

### Best Mode for Carrying Out the Invention

A best mode for carrying out the present invention will be described below, based on the accompanying drawings. Incidentally, the drawings are to be viewed according to the attitude of reference symbols.

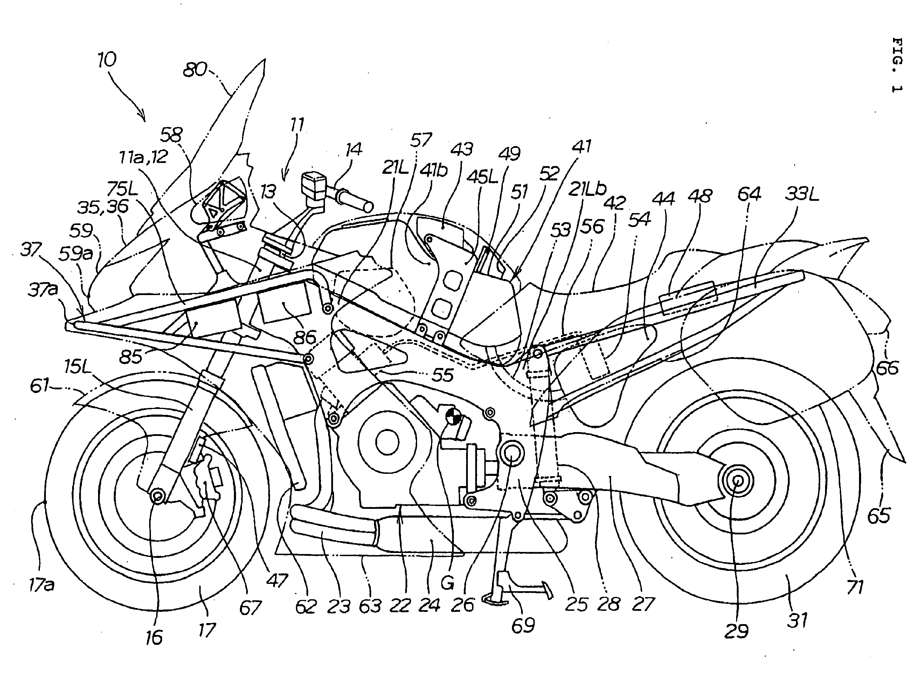

FIG. 1 is a left side view of a motorcycle according to the present invention. The motorcycle 10 includes, as main components: a head pipe 12 provided at a front end part 11a of a body frame 11; a steering handle 14 turnably provided at the head pipe 12 through a steering shaft 13; left and right front forks 15L, 15R (only 15L on the viewer's side of the drawing is shown, here and hereinafter) connected to the steering shaft 13 and having a cushion function for absorbing vibrations and the like that the vehicle receives from the road surface; a front wheel 17 turnably mounted to a front wheel axle 16 bridgingly arranged between lower end parts of the front forks 15L, 15R; main frames 21 L, 21 R (only 21 L on the viewer's side of the drawing is shown) extended toward the rear left and right sides from the head pipe 12; an engine 22 suspended from the main frames 21 L, 21 R; an exhaust pipe 23 extended from the engine 22; a muffler 24 connected to the exhaust pipe 23; a pivot part 25 provided at rear lower parts of the main frames 21 L, 21 R, and a pivot shaft 26 provided at the pivot part 25; a rear swing arm 27 extended rearwards from the pivot shaft 26 and incorporating power transmission means therein; a rear cushion unit 28 provided between the rear swing arm 27 and the main frames 21 L, 21 R and supporting the rear swing arm 27 so as to permit the latter to swing about the pivot shaft 26; a rear wheel axle 29 provided at a rear end part of the rear swing arm 27; a rear wheel 31 as a drive wheel which is turnably mounted to the rear wheel axle 29; and seat frames 33L, 33R (only 33L on the viewer's side of the drawing is shown) extended toward the rear upper side from rear end parts of the main frames 21 L, 21 R.

The layout of component parts pertaining to an upper part of the motorcycle will be described below.

The motorcycle 10 includes: the main frames 21 L, 21 R extended toward the rear left and right sides from the head pipe 12; a fuel tank 41 provided between the left and right main frames 21 L, 21 R; the seat frames 33L, 33R extended rearwards from rear end parts 21 Lb, 21 Rb (only 21 Lb on the viewer's side of the drawing is shown) of the main frames 21 L, 21 R; a rider seat 42 supported by the seat frame 33L, 33R so as to seat the rider(s) thereon; and an air bag module 43 provided on the front side of the rider seat 42.

The air bag module 43 is disposed on the upper side of a rear part 41 b of the fuel tank 41, and is attached to stay members 45L, 45R (only 45L on the viewer's side of the drawing is shown) extended upwards from the left and right main frames 21 L, 21 R.

In the air bag module 43, an air bag which will be described later is contained in a folded state. In order to inflate the air bag at a predetermined time, a shock sensor 47 for detecting a shock exerted on the motorcycle 10 upon collision of the motorcycle 10 serving as a vehicle is disposed on the front fork 15L, and an air bag control unit 48 for controlling the inflation time of the air bag on the basis of a signal obtained through detection by the shock sensor 47 or the like is disposed at a lower rear part in relation to the rider seat 42. The air bag module 43, the shock sensor 47 and the air bag control unit 48 are connected together with a harness (not shown).

A space 51 capable of containing small things such as a wallet and an ETC unit 49 therein is provided on the upper side of a rear part of the fuel tank 41 and on the rear side of the air bag module 43, and a small-thing container 52 utilizing this space is provided, thereby enhancing the utility for the rider(s).

A fuel supply system will now be described. A fuel sub-tank 44 is disposed on the rear lower side of the fuel tank 41 and on the lower side of the rider seat 42, between the left and right seat frames 33L, 33R as viewed from the upper side of the vehicle. A fuel pump 54 for feeding out a fuel to the engine 22 side is provided on the inside of the fuel sub-tank 44. The fuel tank 41 and the fuel sub-tank 44 are connected to each other by a pipe 53 for passing the fuel. The fuel pump 54 is connected through a fuel hose 56 to a fuel supply system 55 which is provided at an intake part of the engine 22 and which supplies a fuel-air mixture.

According to the above configuration, the fuel in the fuel tank 41 is fed into the fuel sub-tank 44, is fed through the fuel pump 54 and the fuel hose 56, and is supplied to the engine 22 through the fuel supply system 55 provided in the vicinity of the engine 22.

In the figure, symbol 57 denotes an air cleaner which is so disposed as to partly overlap with the fuel tank 41 in side view and which supplies filtered air to the fuel supply system 55, symbol 58 denotes a side mirror attached to the front cowl 36 for the rider to look rearwards, 59 denotes a head light, 61 denotes a front fender, 62 denotes a radiator unit, 63 denotes a main cowl, 64 denotes a rear cowl, 65 denotes a rear fender, 66 denotes a tail lamp, 67 denotes a front disk brake unit, 69 denotes a main stand, 71 denotes a side trunk attached to the seat frame 33L so as to store luggage therein.

Now, a cowl stay 37 provided at a front part of the vehicle will be described below.

The motorcycle 10 is provided with the cowl stay 37 which is extended toward the front side of the left and right main frames 21 L, 21 R and which supports the front cowl 36 serving as a cowling 35 covering the vehicle.

The cowl stay 37 is so disposed that, in side view of the vehicle, a front end part 37a thereof is located on the rear side relative to a front end part 17a of the front wheel 17 and on the front side relative to a front end part 59a of the head light 59 provided on the front side of the head pipe 12 so as to illuminate the front side of the vehicle. In the figure, symbol G denotes the center-of-gravity position of the vehicle. The cowl stay 37 is disposed above the center-of-gravity position G of the vehicle. The detailed structure of the cowl stay 37 will be described later.

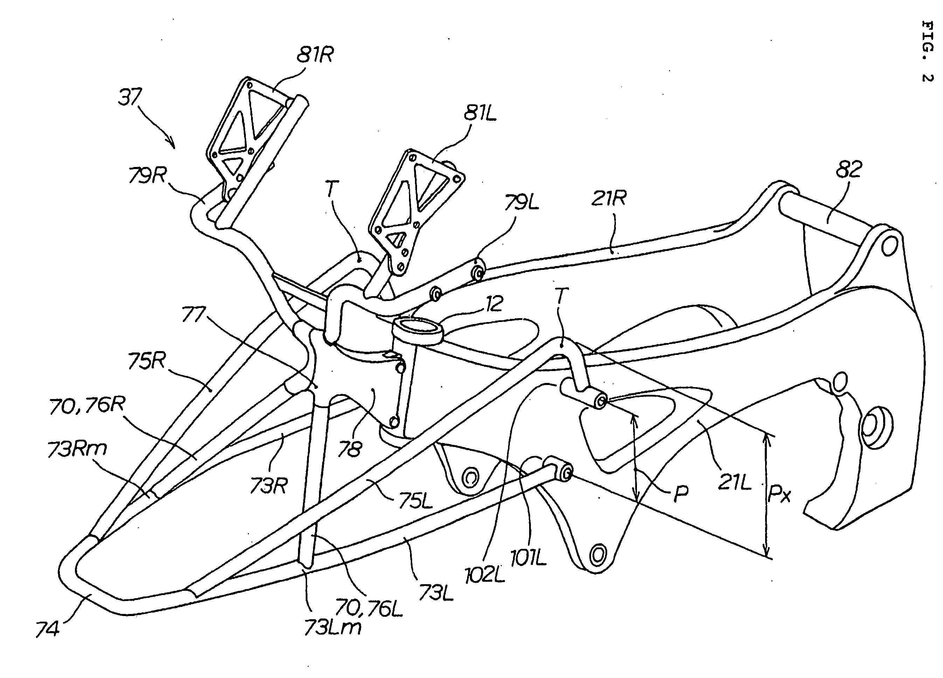

FIG. 2 is a perspective view of the cowl stay provided in the motorcycle according to the present invention. The cowl stay 37 includes: left and right main stay parts 73L, 73R extending substantially horizontally in a forward direction from the main frames 21 L, 21 R; a cross part 74 connecting the front ends of the main stay parts 73L, 73R to each other; left and right slant members 75L, 75R as members for respectively connecting intermediate parts 73Lm, 73Rm of the main stay parts 73L, 73R to the main frames 21 L, 21 R to thereby reinforce the main stay parts 73L, 73R; lower arm parts 76L, 76R as arm parts 70 extended toward the inner upper side from the left and right main stay parts 73L, 73R; a connection part 77 connecting the upper ends of the lower arm parts 76L, 76R to each other; a center arm 78 extended from a front part of the head pipe 12 to the connection part 77 so as to support the connection part 77; upper arm parts 79L, 79R extended toward the left and right sides from the connection part 77; and left and right cowl brackets 81 L, 81 R which are provided at tip parts of the upper arm parts 79L, 79R and to which a front cowl (denoted by symbol 36 in the drawings). Thus, the cowl stay 37 is mounted to the main frames 21 L, 21 R and the head pipe 12. In the figure, symbol 82 denotes a cross member.

Here, the points 101L, 101 R (only symbol 101 L on the viewer's side of the drawing is shown) at which the main stay parts 73L, 73R are mounted to the main frames 21 L, 21 R and the points 102L, 102R (only symbol 102L on the viewer's side of the drawing is shown) at which the slant members 75L, 75R are mounted to the main frames 21 L, 21 R are different points, and the points 102L, 102R and the points 101 L, 101 R are spaced from each other by a spacing P in the vehicle height direction.

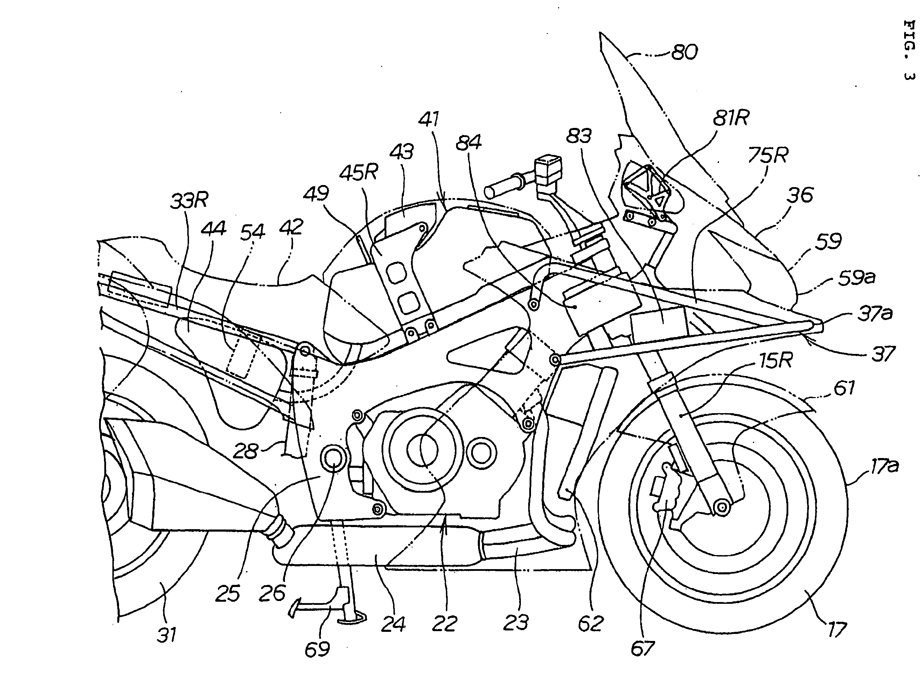

FIG. 3 is a side view of a right front part of the motorcycle according to the present invention. In the cowl stay 37, a regulator 83 and a battery 84 are mounted to the right-side slant member 75R in this order from the front side toward the rear side.

Referring to FIGS. 1 to 3, the cowl stay 37 is mounted to the main frames 21 L, 21 R, so that the mounting strength of the cowl stay 37 can be enhanced largely, as compared to the case where the cowl stay 37 is mounted only to the head pipe 12.

The front cowl 36 formed as one body with a shield 80 covering the front side of the rider is attached to the cowl brackets 81 L, 81 R, and the head light 59 is attached thereto through a bracket (not shown). An engine control unit 85 and an ABS control unit 86 on the rear side of the engine control unit 85 are mounted to the left-side slant member 75L of the cowl stay 37, in this order from the front side toward the rear side. As above-mentioned, the regulator 83 and the battery 84 are mounted to the right-side slant member 75R of the cowl stay 37, in this order from the front side toward the rear side. Consequently, a good center-of-gravity balance between the left and right parts of the motorcycle 10 can be secured. Incidentally, since the cowl stay 37 is covered with the front cowl 36, the appearance quality of the vehicle can be kept good.

The cowl stay 37 includes the cross member 74 connecting the front ends of the main stay parts 73L, 73R to each other, and the left and right slant members 75L, 75R for connecting the intermediate parts 73Lm, 73Rm of the main stay parts 73L, 73R to the main frames 21 L, 21 R. Therefore, the strength of the cowl stay 37 can be enhanced, as compared with the case where only the main stay parts 73L, 73R are provided to constitute the cowl stay 37.

In addition, by utilizing the main stay parts 73L, 73R and the slant members 75L, 75R, it is possible, for example, to mount the regulator, the battery and the control units to the slant members 75L, 75R or the like. Since various component parts can be mounted to the main stay parts 73L, 73R and the slant members 75L, 75R, the degree of freedom in layout of the component parts in a front part of the vehicle can be enhanced largely.

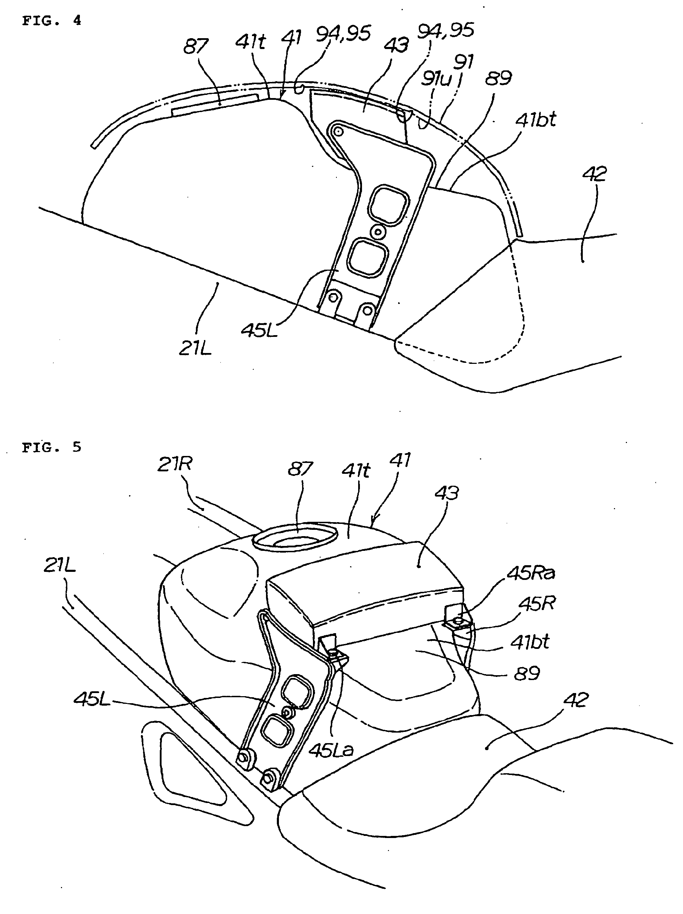

FIG. 4 is a side view of the air bag module disposed on the upper side of a rear part of the fuel tank and the surroundings of the air bag module, and FIG. 5 is a perspective view of the air bag module disposed on the upper side of the rear part of the fuel tank and the surroundings of the air bag module. In FIG. 5, a tank cover 91 is omitted. Now, description will be made below, referring to FIGS. 4 and 5 together.

The fuel tank 41 is disposed between the left and right main frames 21 L, 21 R, and are mounted to the main frames 21 L, 21 R. The fuel tank 41 is provided with a fuel tank feed port 87 at a front part thereof, and is provided with a recess 89 at a rear part upper surface 41 bt thereof. The air bag module 43 is disposed in the recess 89.

More specifically, the air bag module 43 is mounted bridgingly between left and right upper end parts 45La, 45Ra of the stay parts 45L, 45R extending upwards from the left and right main frames 21 L, 21 R.

Since the recess 89 is provided at the rear part upper surface 41 bt of the fuel tank 41 and the air bag module 43 is disposed in the recess 89, the air bag module 43 can be so disposed as not to project from the upper surface 41t t of the fuel tank 41.

When the air bag module 43 can be so disposed as not to project from the upper surface 41t t of the fuel tank 41, ruggedness in the upper surface 41t of the fuel tank 41 can be suppressed, the upper surface 41t of the fuel tank 41 can be rendered neat, and the appearance quality of the fuel tank 41 and the surroundings thereof can be restrained from being lowered.

In addition, with the air bag module 43 disposed in the recess 89 formed at the rear part upper surface of the fuel tank, the air bag at the time of inflation is inflated toward the rider, so that the air bag can be efficiently inflated without using any support belt.

In this embodiment, the fuel tank 41, the air bag module 43, and the stay members 45L, 45R are collectively covered with a tank cover 91. Therefore, the appearance quality of the fuel tank 41 and the surroundings can be enhanced largely, while permitting the air bag module 43 to be disposed in the vicinity of the rider.

Referring to FIG. 1 also, the seat frames 33L, 33R are provided respectively on the left and right sides, and the fuel sub-tank 44 is disposed between the left and right seat frames 33L, 33R as viewed from the upper side of the vehicle. Therefore, the reduction in the capacity of fuel due to the recess 89 provided in the fuel tank 41 can be compensated for by the fuel sub-tank 44. Specifically, the reduction in the capacity of the fuel tank 41 due to the air bag module 43 contained in the recess 89 and to the air cleaner 57 so disposed as to overlap with the fuel tank 41 in side view can be compensated for by the fuel sub-tank 44.

In addition, a fuel sub-tank 93 accompanied by a fuel supply system 92 is disposed between the seat frames 33L, 33R. Therefore, when the fuel sub-tank 93 and the fuel supply system 92 are disposed in the vicinity of the engine 22, it is possible to realize both a lowering of the center of gravity of the vehicle and concentration of mass. The lowering of the center of gravity and the concentration of mass promise further enhancement of the driveability of the vehicle.

A lower surface 91 u of the tank cover 91 is provided, at its portion facing the air bag module 43, with a fragile part 95 such as a notch part 94. The fragile part 95 is so designed that a portion on the side closer to the rider on the rear side in the front-rear direction of the vehicle is more fragile than a portion on the side remoter from the rider, whereby it is ensured that at the time of inflation of the air bag module 43, the air bag 97 can be inflated toward the rider's side.

Incidentally, while the fragile part 95 is the notch part 94 in this embodiment, the fragile part 95 may be a portion obtained by rendering the tank cover 91 thinner than the other portions.

The operation of the motorcycle equipped with the air bag module and the cowl stay as above-mentioned will be described below.

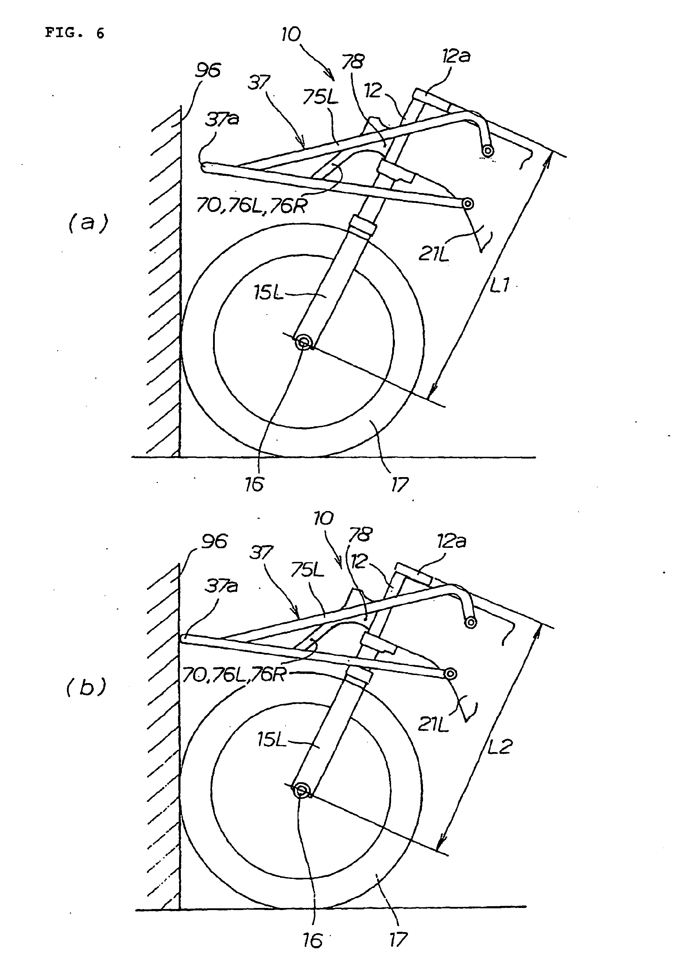

FIG. 6 illustrates the operation of the cowl stay provided in the motorcycle according to the present invention.

(a) of FIG. 6 illustrates the collision of the front wheel 17 against an object 96, in the case where an excessively strong shock is exerted on the motorcycle 10, which serves as a vehicle, from the front side. In the figure, the distance between the front wheel axle 16 and the upper end part 12a of the head pipe 12 is L1.

In (b) of FIG. 6, upon collision of the vehicle against the object 96, for absorbing the shock, the front forks 15L, 15R shrinks, and the vehicle body inclusive of the main frames 21 L, 21 R falls along the axial direction of the front forks 15L, 15R. In the figure, the distance between the front wheel axle 16 and the upper end part 12a of the head pipe 12 is L2 (L2 < L1).

In the case where the motorcycle 10 receives an excessively strong impact force from the front side, the configuration in which the front forks 15L, 15R are disposed with their upper end portion inclined rearwards ensures that, upon receiving the shock, the main frames 21 L, 21 R fall along the axial direction of the front forks 15L, 15R and are moved forwards relative to the position of the front wheel 17, so that a front end part 37a of the cowl stay 37 collides against the object 96.

The cowl stay 37 itself is securely provided with strength, through provision of the reinforcing slant members 75L, 75R (only symbol 75L on the viewer's side of the drawing is shown) or the like. In addition, the cowl stay 37 is mounted to the main frames 21 L, 21 R and the head pipe 12 at the plurality of points 101 L, 101 R, 102L, 102R, so that a sufficient mounting strength is secured. Consequently, the cowl stay can function as a front bumper of the motorcycle 10.

In the case where the cowl stay 37 configured as above is disposed on the upper side of the front wheel 17 and an excessively strong shock is exerted from the front side, the shock upon the collision against the object 96 is received by two points including the front wheel 17 and the cowl stay 37. Therefore, the change in the attitude of the motorcycle 10 can be suppressed, as compared with the case where the shock is received by the front wheel 17 alone.

Now, the operation of the cowl stay 37 will be described below referring to FIG. 2 also.

The main stay parts 73L, 73R and the slant members 75L, 75R are mounted to the main frames 21 L, 21 R at the different points 101 L, 101 R, 102L, 102R. Therefore, when a shock is inputted to the main stay parts 73L, 73R from the front side, the slant members 75L, 75R support the main stay parts 73L, 73R so as to suppress bending of the main stay parts 73L, 73R. Since the input from the front side is received by the plurality of different points, the rigidity of the cowl stay 37 can be enhanced. With the rigidity of the cowl stay 37 enhanced, the change in the attitude of the vehicle can be suppressed more.

In addition, the slant member 75L, 75R are each formed in a roughly inverted V shape pointing to the upper side of the vehicle. Since the slant members 75L, 75R are each formed in the roughly inverted V shape, the main stay parts 73L, 73R are bent when an excessively strong shock is inputted from the front side. Since the slant members 75L, 75R are each formed in the roughly inverted V shape, they are liable to be bent in such a direction as to be projected upwards, at the vertex parts T, T of the roughly inverted V shape. In this case, the spacing Px between the main stay parts 73L, 73R and the slant members 75L, 75R is enlarged, so that the possibility of a change in the attitude of the vehicle is lowered. Besides, a shock-absorbing effect can be provided.

The cowl stay 37 has the center arm 78 and the arm parts connecting the center arm 78 to the main stay parts 73L, 73R, so that the rigidity of the cowl stay 37 can be enhanced further. Since the main stay parts 73L, 73R provided in the cowl stay 37 are supported by the center arm 78 and the lower arm parts 76L, 76R as the arm parts 70 as well as by the slant members, the possibility of concentration of a load on the slant members 75L, 75R can be lowered, as compared with the case where only the slant members 75L, 75R are provided. With the possibility of concentration of a load on the slant members 75L, 75R thus lowered, the slant members 75L, 75R can be rendered lighter in weight, and a reduction in the weight of the cowl stay as a whole can be realized.

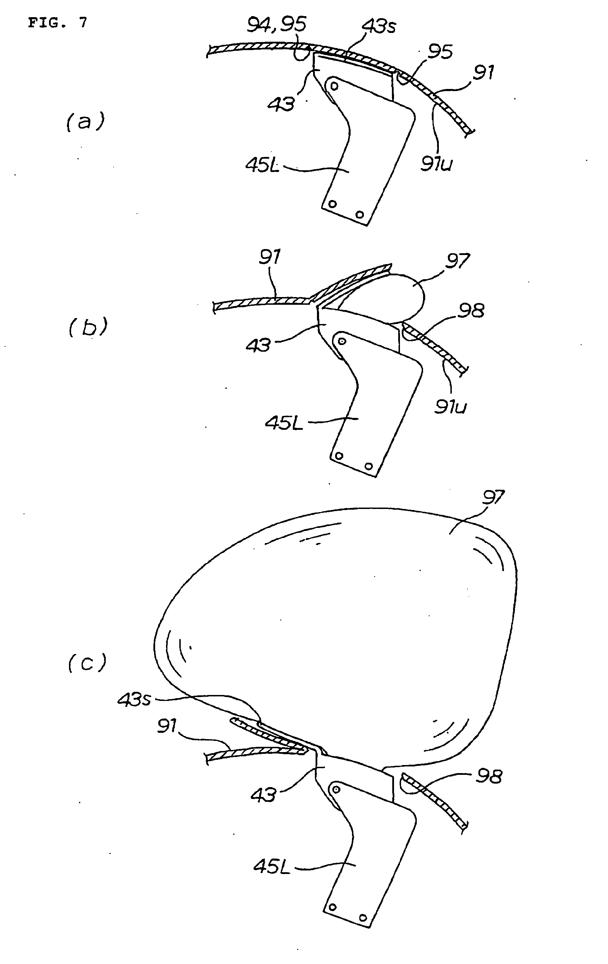

FIG. 7 illustrates the operation of the air bag module.
(a) of FIG. 7 is an illustration of the air bag module 43 in its non-operating state. The lower surface 91 u of the tank cover 91 is provided, at its portion fronting on the air bag module 43, with the fragile part 95 inclusive of the notch part 94 or the like. When the air bag module 43 is in its non-operating state, the air bag module 43 is covered with the tank cover 91, whereby the appearance quality of the vehicle can be maintained.
(b) of FIG. 7 is an illustration of the air bag module 43 immediately upon its operation. The lower surface 91u of the tank cover 91 is provided, at its portion fronting on the air bag module 43, with the fragile part 95 inclusive of the notch part 94 or the like, and an upper surface part 43s of the air bag module 43 is configured to be openable while being provided with a front hinge mechanism. Therefore, when the air bag module 43 is operated, the upper surface part 43s is opened by expansion of the air bag 97, and an opening 98 is formed in the fragile part 95, whereby expansion and inflation of the air bag 97 can be permitted to occur smoothly.
(c) of FIG. 7 is an illustration of the condition where the air bag module 43 is operated and the air bag 97 incorporated in the air bag module 43 is put into expansion and inflation. The air bag 97 is inflated toward the upper side of the tank cover 91.

In this embodiment, the recess 89 in which to dispose the air bag module 43 is formed in the rear part upper surface 41 bt of the fuel tank 41. However, the position of the recess 89 may be any position, such as a front portion and an intermediate portion, of the upper surface of the fuel tank 41.

If the recess 89 can be disposed at an arbitrary position in the upper surface 41t of the fuel tank 41, the air bag 97 can be disposed at such a position that the air bag 97 can be operated more effectively in relation to the rider, according to the size of the air bag 97 or the like factors.

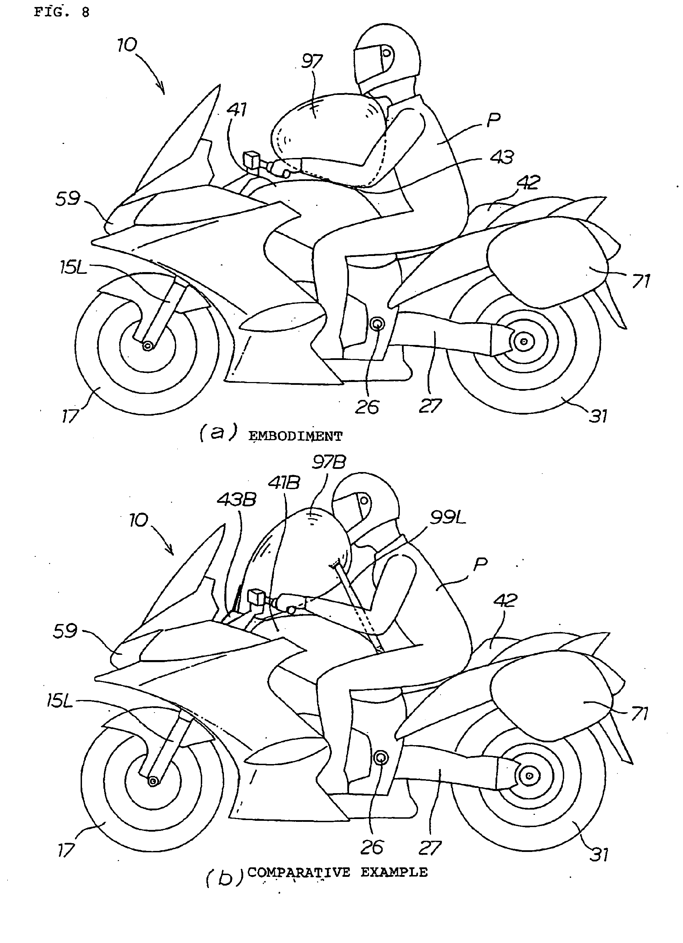

FIG. 8 shows an illustration of the operation of the air bag module provided in the motorcycle according to the present invention and an illustration of a comparative example.
(a) of FIG. 8 shows an embodiment of the present invention, illustrating that the air bag 97 disposed at the rear part upper surface of the fuel tank 41 is inflated to come into contact with the rider P.
   Since the air bag module 43 is disposed on the upper side of a rear part of the fuel tank 41, the air bag module 43 can be disposed to be closer to the rider, as compared with the case where the air bag module 43 is disposed on the front side of the fuel tank 41.
(b) of FIG. 8 shows a comparative example, illustrating that an air bag 97B disposed on the front side of a fuel tank 41 B is inflated to come into contact with the rider P. In this example, the air bag module 43 cannot be disposed close to the rider.

From this point of view, in (a) of FIG. 8, when the air bag 97 is inflated, the inflated air bag 97 can be inflated at a predetermined position, without using any support belts 99L, 99R (only 99L on the viewer's side of the drawing is shown) for supporting the inflated air bag 97 at the predetermined position.

In addition, the fuel tank 41 is disposed between the air bag module 43 and the rider seat 42. On the other hand, in (a) of FIG. 8, the air bag module 43 is disposed at the rear part upper surface 41 bt of the fuel tank 41, whereby the air bag module 43 is disposed closer to the rider seat 42 on which to seat the rider(s). Therefore, the time from the moment of inflation of the air bag 97 to the moment of contact of the inflated air bag 97 with the rider can be shortened, as compared with the case where the air bag module 43 is disposed on the front side of the fuel tank 41.

Referring to FIG. 6 also, the motorcycle 10 is provided with the cowl stay 37, and the air bag 97 is mounted thereto. The provision of the cowl stay 37 ensures that, when the motorcycle 10 equipped with the air bag 97 receives an excessively strong shock from the front side, the change in the attitude of the motorcycle 10 is suppressed. With the change in the posture of the motorcycle 10 thus suppressed, the possibility of changes in the riding position and posture of the rider P is lowered. Consequently, when the air bag 97 is inflated, the positional accuracy in contact of the inflated air bag 97 with the rider P can be enhanced more, the air bag 97 is permitted to acts on the rider P more effectively, and the rider P can be protected more effectively.

Incidentally, while the motorcycle having both the cowl stay and the air bag module has been described in this embodiment, either one of the cowl stay and the air bag module may be omitted.

In the case where a motorcycle is provided with a cowl stay, the cowl stay 37 is disposed at a height above the center-of-gravity position (refer to symbol G in FIG. 1) of the vehicle, so that the change in the attitude of the motorcycle 10 upon a head-on collision of the vehicle can be reduced more, as compared with the case where the cowl stay is disposed below or at the same level as the center-of-gravity position G of the vehicle.

The present invention is directed to provide a technology by which the change in the attitude of a motorcycle can be suppressed when the motorcycle receives an excessively strong impact force from the front side of the vehicle.

The motorcycle 10 includes a head pipe 12, main frames 21 L, 21 R extending toward the rear left and right sides from the head pipe 12, and a cowl stay 37 which extends forwards from the left and right main frames 21 L, 21 R and which supports a cowling 35 covering the vehicle. The cowl stay 37 is so disposed that its front end part 37a is located on the rear side relative to a front end part 17a of a front wheel 17 and on the front side relative to a tip part 59a of a head light 59 provided on the front side of the head pipe 12 so as to illuminate the front side of the vehicle. Besides, the cowl stay 37 is disposed above the center-of-gravity position G of the vehicle.

## Claims

1. A motorcycle (10) comprising a head pipe (12), main frames (21 L, 21 R) extending toward rear left and right sides from said head pipe (12), and a cowl stay (37) extending toward a front side of the left and right main frames (21L, 21R) and supporting a cowling (35) covering the vehicle,
wherein said cowl stay (37) is so disposed that, in a side view of said vehicle, a front end part (37a) thereof is located on a rear side relative to a front end part of a front wheel (17a) and on a front side relative to a tip part of a head light (59a) provided on a front side of said head pipe (12) so as to illuminate a front side of said vehicle,
wherein said cowl stay (37) comprises left and right main stay parts (73L, 73R) extending forwards from said main frames (21 L, 21 R), a cross part (74) connecting front ends of said main stay parts (73L, 73R) to each other, and left and right slant members (75L, 75R) connecting said main stay parts (73L, 73R) and said main frames (21 L, 21 R) to each other,
**characterized in that** said cowl stay (37) has a center arm (78) extending forwards from said head pipe (12), and arm parts (76L, 76R) connecting said center arm (78) to said main stay parts (73L, 73R).

2. The motorcycle (10) as set forth in claim 1, wherein said cowl stay (37) is disposed above a center-of-gravity position (G) of said vehicle.

3. The motorcycle (10) as set forth in claim 1 or 2, wherein said cowl stay (37) is mounted to said main frames (21 L, 21 R).

4. The motorcycle (10) as set forth in claim 1, wherein points at which said main stay parts (73L, 73R) are mounted to said main frames (21 L, 21 R) and points at which said slant members (75L, 75R) are mounted to said main frames (21 L, 21 R) are different.

5. The motorcycle (10) as set forth in claim 4, wherein said slant members (75L, 75R) are formed in a roughly inverted V shape pointing up, in the side view of said vehicle.

6. The motorcycle (10) as set forth in any one of claims 1 to 5, wherein a rider seat (42) for a rider or riders is provided on a rear side of said main frames (21 L, 21 R), and an air bag module (43) is provided on a front side of said rider seat (42).

## Patentansprüche

1. Kraftrad (10) umfassend ein Kopfrohr (12), Hauptrahmen (21 L, 21 R), die sich von dem Kopfrohr (12) zu hinteren linken und rechten Seiten erstrecken, und eine Verkleidungsstrebe (37), die sich zu einer Vorderseite der linken und rechten Hauptrahmen (21 L, 21 R) erstreckt und eine das Fahrzeug abdeckende Verkleidung (35) trägt,
worin die Verkleidungsstrebe (37) so angeordnet ist, dass, in Seitenansicht des Fahrzeugs, ein vorderes Endteil (37a) davon an einer Rückseite relativ zu einem vorderen Endteil eines Vorderrads (17a) und an einer Vorderseite relativ zu einem Endteil eines Scheinwerfers (59a), der an einer Vorderseite des Kopfrohrs (12) zum Beleuchten einer Vorderseite des Fahrzeugs vorgesehen ist, angeordnet ist,
worin die Verkleidungsstrebe (37) umfasst: linke und rechte Hauptstrebenteile (73L, 73R), die sich von den Hauptrahmen (21 L, 21 R) nach vorne erstrecken, ein Querteil (74), das Vorderenden der Hauptstrebenteile (73L, 73R) miteinander verbindet, und linke und rechte Schrägelemente (75L, 75R), die die Hauptstrebenteile (73L, 73R) und die Hauptrahmen (21 L, 21 R) miteinander verbinden,
**dadurch gekennzeichnet, dass** die Verkleidungsstrebe (37) einen Mittelarm (78), der sich von dem Kopfrohr (12) nach vorne erstreckt, und Armteile (76L, 76R), die den Mittelarm (78) mit den Hauptstrebenteilen (73L, 73R) verbinden, aufweist.

2. Das Kraftrad (10) nach Anspruch 1, worin die Verkleidungsstrebe (37) über einer Schwerpunktposition (G) des Fahrzeugs angeordnet ist.

3. Das Kraftrad (10) nach Anspruch 1 oder 2, worin die Verkleidungsstrebe (37) an den Hauptrahmen (21 L, 21 R) angebracht ist.

4. Das Kraftrad (10) nach Anspruch 1, worin Punkte, an denen die Hauptstrebenteile (73L, 73R) an den Hauptrahmen (21 L, 21 R) angebracht sind, und Punkte, an denen die Schräg elemente (75L, 75R) an den Hauptrahmen (21 L, 21 R) angebracht sind, unterschiedlich sind.

5. Das Kraftrad (10) nach Anspruch 4, worin die Schrägelemente (75L, 75R) an einer angenähert umgekehrten V-Form ausgebildet sind, die in der Seitenansicht des Fahrzeugs nach oben weist.

6. Das Kraftrad (10) nach einem der Ansprüche 1 bis 5, worin ein Fahrersitz (42) für einen Fahrer oder für Fahrer an einer Rückseite der Hauptrahmen (21 L, 21 R) vorgesehen ist, und ein Airbagmodul (43) an einer Vorderseite des Fahrersitzes (42) vorgesehen ist.

## Revendications

1. Motocycle (10) comprenant une tubulure de refoulement (12), des cadres principaux (21L, 21R) s'étendant vers des côtés arrière gauche et droit de ladite tubulure de refoulement (12), et un étai de carénage (37) s'étendant vers un côté avant des cadres principaux gauche et droit (21L, 21R) et supportant un carénage (35) couvrant le véhicule,
dans lequel ledit étai de carénage (37) est disposé de sorte que, dans une vue latérale dudit véhicule, une partie d'extrémité avant (37a) de celui-ci est située sur un côté arrière par rapport à une partie d'extrémité avant d'une roue avant (17a) et sur un côté avant par rapport à une partie de pointe d'un phare (59a) disposé sur un côté avant de ladite tubulure de refoulement (12) de façon à éclairer un côté avant dudit véhicule,
dans lequel ledit étai de carénage (37) comprend des parties d'étai principales gauche et droite (73L, 73R) s'étendant vers l'avant desdits cadres principaux (21L, 21R), une partie de traverse (74) raccordant des extrémités avant desdites parties d'étai principales (73L, 73R) l'une à l'autre, et des organes penchés gauche et droit (75L, 75R) raccordant lesdites parties d'étai principales (73L, 73R) et lesdits cadres principaux (21L, 21R) les uns aux autres,
**caractérisé en ce que** ledit était de carénage (37) comporte un bras central (78) s'étendant vers l'avant de ladite tubulure de refoulement (12), et des parties de bras (76L, 76R) raccordant ledit bras central (78) auxdites parties d'étai principales (73L, 73R).

2. Motocycle (10) selon la revendication 1, dans lequel ledit étai de carénage (37) est disposé au-dessus d'une position de centre de gravité (G) dudit véhicule.

3. Motocycle (10) selon la revendication 1 ou 2, dans lequel ledit étai de carénage (37) est monté sur lesdits cadres principaux (21L, 21R).

4. Motocycle (10) selon la revendication 1, dans lequel des points au niveau desquels lesdites parties d'étai principales (73L, 73R) sont montées sur lesdits cadres principaux (21L, 21R) et des points au niveau desquels lesdits organes penchés (75L, 75R) sont montés sur lesdits cadres principaux (21L, 21R) sont différents.

5. Motocycle (10) selon la revendication 4, dans lequel lesdits organes penchés (75L, 75R) sont formés grossièrement en une forme de V inversé pointant vers le haut, dans la vue latérale dudit véhicule.

6. Motocycle (10) selon l'une quelconque des revendications 1 à 5, dans lequel un siège de conducteur (42) pour un ou des conducteurs est disposé sur un côté arrière desdits cadres principaux (21L, 21R), et un module de coussin de sécurité gonflable (43) est disposé sur un côté avant dudit siège de conducteur (42).
